Europäisches Patentamt

European Patent Office

Office européen des brevets

(11) Publication number: **0 261 586**
**A2**

(12) # EUROPEAN PATENT APPLICATION

(21) Application number: **87113579.4**

(22) Date of filing: **17.09.87**

(51) Int. Cl.⁴: **A23C 20/02** , A23L 1/20

(30) Priority: **24.09.86 DK 4559/86**

(43) Date of publication of application:
**30.03.88 Bulletin 88/13**

(84) Designated Contracting States:
**AT BE CH DE ES FR GB GR IT LI LU NL SE**

(71) Applicant: **PASILAC-DANISH TURNKEY DAIRIES A/S**
**Europaplads 2 P.O. Box 146**
**DK-8100 Aarhus C(DK)**

(72) Inventor: **Andersen, Ole**
**Brynhildsvej 9**
**DK-8900 Randers(DK)**
Inventor: **Bojgaard, Svend Erik**
**Höjgaardsparken 23**
**DK-8280 Trige,Sporring(DK)**

(74) Representative: **UEXKÜLL & STOLBERG**
**Patentanwälte**
**Beselerstrasse 4**
**D-2000 Hamburg 52(DE)**

(54) **A cheese-like product, a process of its preparation and the use thereof.**

(57) A cheese-like product with a dry matter content of at least 30 per cent by weight in which the major part comprises vegetable materials obtained from protein containing seeds, such as seeds from leguminous plants and/or other seeds rich in protein and optionally including one or more additives; the preparation thereof by ultrafiltration optionally combined with diafiltration of a protein containing extract from seeds without using a coagulant, and the use thereof as a substitute for conventional semi-solid or solid cheese types and as a substitute for meat.

Fig. 1

# A cheese-like produkt, a process of its preparation and the use thereof

The present invention relates to a cheese-like product comprising as a major part vegetable materials extracted from protein containing seeds, such as seeds from leguminous plants and/or other seeds rich in protein and optionally including one or more additives, such as flavours, colouring matter, pH-adjusting agents, essences, salts, fat or oil containing substances, additional proteins of vegetable or animal origin, carbohydrates and bacteria cultures, a process for its preparation and the use thereof as a substitute for conventional semi-solid and solid cheese types, and a substitute for meat and furthermore for the manufacture of a crisp product, e.g. of the "snack" type.

A vegetable cheese type called Tofu made of soymilk using a coagulant is known. This type of cheese can, however, not be considered to be a valid substitute for traditional semi-solid and solid cheese types as the texture of the different types of Tofu can vary from pudding consistency to a smooth, loose and open mass. Furthermore traditional Tofu is unsuitable for grating since such a treatment forms a sloppy mass. The process of manufacturing Tofu is for instance described in GB 2.155.751.

A milk based product called Cheese-base is also known, which product is made by concentrating milk by ultrafiltration, optionally combined with diafiltration, inoculating the resulting retentate with an acid culture before evaporation, evaporating the pre-acidified retentate and then packing the evaporated product whereby acidification is completed in the package, cf. GB 2.101. 866.

Surprisingly it has turned out that it is now possible to produce a vegetable cheese-like product with a sufficiently high content of dry matter for obtaining such a compact structure that the product gets a slicable solid texture. This is possible, even without using a coagulant and without performing the relatively great number of process steps normally required to produce traditional Tofu or solid cheese.

WO 84/00474 discloses a method of removing undesired ingredients, such as colouring matters and flavours, from protein concentrates based on oilseeds by ultrafiltration and optionally reverse osmosis. The resulting concentrate is light and has a neutral flavour.

SE 437460 discloses the preparation of a liquid soya protein containing product inter alia by ultrafiltration and optionally followed by a dialysis of protein containing exctracts. Thus the end product is indeed a concentrated product, but still liquid.

DE 2504249 B discloses the preparation of a powdered material rich in protein from coarsely cut parts of plants by ultrafiltration, centrifuging for separation into two liquid fractions, and following evaporation of the most concentrated fraction. The resulting green product is not sliceable but suited for admixing into nutrients and feedstuffs.

The cheese-like product according to the invention is characterised in that it is prepared by ultrafiltration, optionally combined with diafiltration of a protein containing extract from seeds without using a coagulant, followed by evaporation and in that is is sliceable and has a dry matter content of at least 30 per cent by weight, calculated without considering additives, if present.

The inventive product is a slicable cheese-like product which can be used as it is or it can form part of other products for use e.g. as foodstuffs, stimulants, feeding stuffs or culture media. The product is characterised by a high content of protein and a very low content of trypsin inhibitor and alpha-galactocides. In this way inhibition of the digestive enzyme trypsin is prevented thus ensuring a proper protein clevage an avoiding the risk of liver damages. Alpha-galactocides are undesirable taste components and furthermore they result in the production of methane in the digestive tract (an inflated stomach). The product thus is characterised by an improved nutritive value.

The product according to the invention is especially valuable for veganes. Veganes only eat vegetable products and are therefore in danger of getting too small an amount of protein in their daily food. Daily intake of the inventive product reduces this risk.

A specially advantageous cheese-like product accord ing to the invention is characterised in a trypsin content of below 5,000 units per gram and an alpha-galactoside content of below 1 per cent by weight, both calculated on dry matter and without considering additives, if present.

An advantageous inventive product is characterised by being manufactured of an extract of seeds from leguminous plants, as these are distinguished by a high content of soluble and/or dispersable or emulsifyable proteins. Soymilk made of soybeans is preferred according to the invention as soybeans are the cheapest existing accessible source of food protein.

An also preferred cheese-like product according to the invention is characterised by being manufactured of an extract of one of more plants chosen among plants of the genera Chenopodium (e.g. goosefoot and pigweeds), Atriplex (e.g. orache), Fagopyrum (e.g. buckwheat), Polygonum (e.g.

knotgrass and knotweeds), Lupinus (e.g. lupine), Hordeum (e.g. barley), Zea (e.g. maize), Sorghum (e.g. durra), Panicum (e.g. millet), Setaria (e.g. Italian millet), Pennisetum (e.g. pearl millet), Eleusine (e.g. Coracana), Oryza (e.g. rice), Avena (e.g. oats), Triticum (e.g. wheat), Triticale, and Secale (e.g. rye). Seeds of these plants is characteristic in that milk-like products with a high content of soluble and/or dispersable or emulsifyable proteins can be made thereof.

The present invention furthermore discloses a process of preparing the above cheese-like product which process is characterised in ultrafiltrating, optionally combined with diafiltration, a milk-like starting material made of seeds of leguminous plants and/or other seeds rich in protein and optionally containing one or more additives; optionally adding one or more additives to the resulting retentate; and evaporating the retentate including the additives, if present, to obtain a product, which product, optionally after a finishing process known per se, can substitute traditional semi-solid or solid cheese types.

It is quite surprising for persons skilled in the art that it is possible to obtain a cheese-like product of the above stated high dry matter content by the above very simple inventive process of preparation.

By a particularly preferred embodiment of the inventive process, the evaporated product is submitted to one or more finishing treatments in order to enhance the storage life of the product, its appearance and its handiness, said finishing treatments being chosen among autoclaving, surface treatment such as treatment with mould inhibiting agents, e.g. natamycine, application of a surface coating of e.g. paraffin or plastics, and packaging for dispatch and distribution.

By a further preferred embodiment of the invention the milk-like starting material contains one or more additives chosen among flavours, colouring matter, pH-adjusting agents, essences, salts, fat or oil containing substances, additional proteins of vegetable or animal origin, carbohydrates and bacteria cultures.

By a likewise preferred embodiment of the invention one or more additives chosen among flavours, colouring matter, pH-adjusting agents, essences, salts, fat or oil containing substances, additional proteins of vegetable or animal origin, carbohydrates and bacteria cultures can be added to the retentate before evaporation.

The product prepared according to the inventive process has a dry matter content, calculated without considering additives, if present of at least 30 per cent by weight, usually from about 30 to about 60 percent by weight, especially from about 35 to about 50 percent by weight and it is characterised by a low content of alpha-galactocides of normally below 1 per cent by weight, calculated on the dry matter content of the final product without considering additives. By the inventive process the content of trypsin inhibitor is also reduced compared with the corresponding content thereof in the basic material, e.g. from about 100,000 to 5,000 trypsin units per gram dry matter calculated without considering the additives.

As examples of suitable milk-like starting materials applicable in connection with the invention can be mentioned milk-like products of mainly vegetable origin and with a high content of soluble and/or dispersable or emulsifyable proteins. As an example of a preferred starting material can be mentioned soymilk made of soybeans. Soybeans are commerically available in large quantities at a low price and is considered the cheapest available foodstuff protein source.

The starting materials mentioned above can be manufactured in a per se conventional way from vegetable raw materials with a high content of proteins having the above properties. As examples of usable raw materials can be mentioned: Most protein and oil containing seeds, especially seeds from leguminous plants (Leguminosae), such as soy (Glycine max.) and Winged Beans (Psophocarpus tetagonolobus).

Furthermore can be mentioned pea (Pisum sativum), peanut (Arachis hypgaea), broad bean or horse bean (Vicia faba), cow pea (Vigna unguiculata, Vigna sinensis), kidney bean (Phaseolus vulgaris), lentil (Lens culinari), chick pea (Cicer arietinum), and mung beans (Vigna radiata, Phaseolous aureus). Among suitable seeds from plants not belonging to the leguminous plants can be mentioned seeds from the plants of the genera Chenopodium (e.g. goosefoot and pigweeds), Atriplex (e.g. orache), Fagopyrum (e.g. buckwheat), Polygonum (e.g. knotgrass and knotweeds), Lupinus (e.g. lupine), Hordeum (e.g. barley), Zea (e.g. maize), Sorghum (e.g. durra), Panicum (e.g. millet), Setaria (e.g. Italian millet), Pennisetum (e.g. pearl millet), Eleusine (e.g. coracana), Oryza (e.g. rice), Avena (e.g. oats), Triticum (e.g. wheat), Triticale, and Secale (e.g. rye). Seeds from the plant quinoa (Chenopodium pallid boute or Chenopodium quinoa) belonging to the genus Chenopodium can also be mentioned.

Generally it must be recommended that the basic raw material consists of totally or partially water soluble, vegetable proteins.

As examples of particularly suitable raw materials can be mentioned not-dehulled soybeans, dehulled soybeans, degreased soyflour supplemented with refined soyoil, and various soy protein concentrates which may be supplemented with one or more components selected from refined soyoils, animal fat, other vegetable oils and oil mixtures. When preparing the milk-like starting material on basis of the above raw materials using processes known from the literature, an aqueous extractant, such as water, whey, brine, or milk may be used. The ratio between extractant and vegetable raw material is not decisive, but should when using beans and water be in the range from 1:4 to 1:15, and if desired also further components may be added. Normally it must be recommended to perform a safety filtration of the milk-like product, e.g. by use of a sieve and/or decanter to ensure the removal of insoluble material, including fibres and starch, which might disturb the ultrafiltration/diafiltration.

If desired one or more additives can be added to the milk-like starting material before or after the ultrafiltration with or without diafiltration before the evaporation of the retentate. Examples of such additives are flavours, colourings, pH-adjusting agents, essences, salts, fat or oil containing substances, bacteria cultures, carbohydrates and optionally other protein containing materials of animal or vegetable origin. Such additives serve to standardize the final product, e.g. to standardize the fat content, the salt content, the flavour and aroma and the pH-value. Furthermore it is possible to perform both chemical and bacteriological acidification. As examples of usable flavours can be mentioned condensed milk flavour, fruit flavour, spice flavour, cheese aroma, salt, yeast extract, and flavouring bacteria cultures. As examples of colouring matter can be mentioned carotin, annato, saffron, and chlorophyll. As examples of additives of the protein type can be mentioned highly functional vegetable proteins and milk proteins in the form of caseinates and whey proteins. By the choice of additives not only technical considerations but also the usability of the final product for lacto-ovo-vegetarians and especially vegetarians should be allowed for. Since lacto-ovo-vegetarians accept additives based on milk and eggs, it is possible to standardize the final product for these consumers by means of milk-based substances. For vegetarians only additives of vegetable origin can be employed. The inventive products being exclusively vegetable are particularly well suited for protecting vegetarians against a deficiency of proteins which is an acute danger for this group of people.

The ultrafiltration of the milk-like starting material is performed according to prosesses known per se using ultrafiltration equipment known per se. For example the ultrafiltration can be performed with ultrafiltration modules, 36 and 37, from DDS-RO division, DK-4900 Nakskov, which normally are fitted with membranes having a cutoff value of between 10,000 and 100,000. Normally the ultrafiltration is performed until a dry matter content of 18 - 28 per cent by weight is obtained, especially 21 - 23 per cent by weight in the retentate. During ultrafiltration the temperature should be maintained between 30 and 70°C, preferably between 50 and 65°C. The retentate obtained after ultrafiltration with or without diafiltration is evaporated according to processes known per se, yet preferably using a scraped surface vacuum evaporator, e.g. a large AFE-evaporator from Niro Atomizer, Gladsaxevej 305, DK-2860 Søborg. The evaporation normally takes place at a temperature of between 40 and 100°C and normally evaporation is performed until a dry matter content of 30 - 60 per cent by weight, such as 35 - 50 per cent by weight is obtained.

The product obtained is a slicable and grateable, cheese-like product which can be used as it is or form part of other products for use as for instance foodstuffs, stimulants, feeding stuffs or culture media. The product is furthermore, especially in grateable form an excellent substitute for minced meat. The product obtained is characterised by a high content of protein and a very low content of trypsin inhibitor and of alpha-galactocides. In this way inhibition of the digestive enzyme trypsin is sprevented thus ensuring a proper protein clevage in the intestine tract and avoiding the risk of liver damages. Alpha-galactocides are undesirable taste components and furthermore they result in the production of methane in the digestive tract (an inflated stomach). Accordingly the product has an improved nutritive value and is extremely valuable especially for veganes.

The product prepared according to the inventive process can substitute conventional semi-solid and solid cheese types. Furthermore it can substitute meat. It can of course if desired or if necessary be subjected to various treatments to enhance the storage life of the product, its appearance and/or handiness. As examples of such finishing treatments can be mentioned autoclaving for enhancement of the storage life, surface treatment such as treatment with mould inhibiting agents, e.g. natamycine, application of a surface coating of e.g. paraffin or plastics, and packaging, e.g. shrink packaging.

As stated above the inventive product can be used as a substitute for conventional semi-solid and sold cheese types and is thus usable where such cheese types are normally used. It can also be used as a substiture for meat. The inventive product is furthermore suitable for the manufacture of a crisp product of the "snack" type, achieved by a heat treatment of the product by cooking, frying, baking or treatment in a microwawe oven.

The invention is further elucidated in the following preparation, elucidating the preparation of a milk-like starting material and in the examples illustrating the inventive product and uses thereof.

## Preparation.

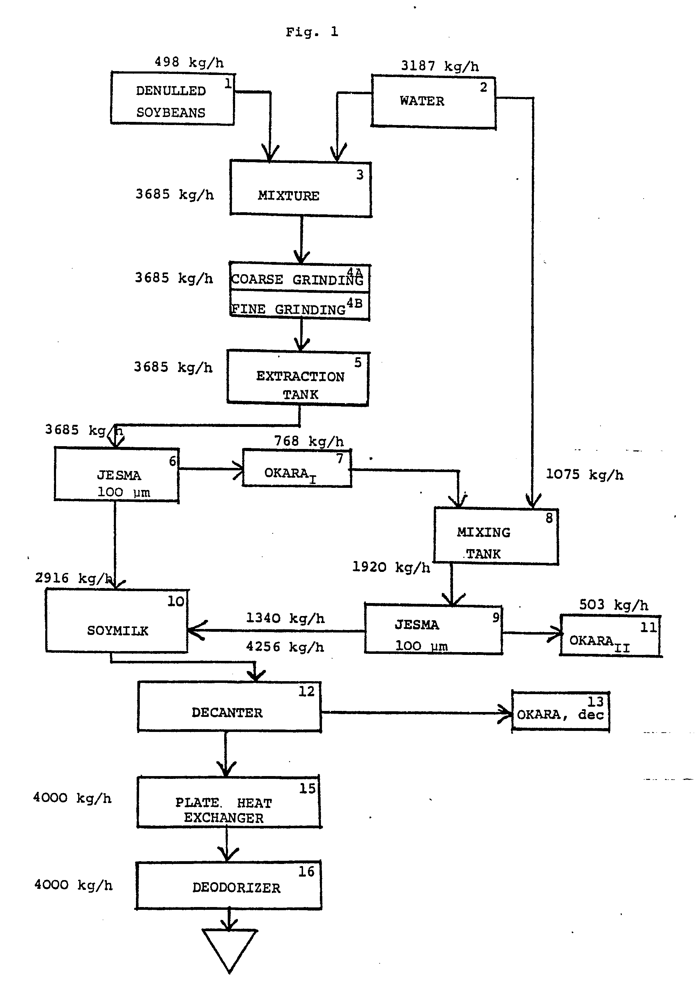

### Preparation of soymilk (Figure 1).

The present preparation describes the preparation of the soymilk for use as starting material in the inventive process. The preparation is shown - schematically in Figure 1.

Dehulled soybeans of the type US-yellow no. 2 (1) in an amount of 498 kg/hour are added to 95°C hyperfiltrated water (2) in an amount of 3187 kg/hour resulting in a mixture of 3685 kg/hour (3) of beans and water in the weight ratio 1:7.

The mixture (3) is subjected to a coarse grinding (4a) in a Corundum stone mill, model No. MK 180 from Fryma Maschienen AG, Theodorhofweg, CH-4310 Rheinfelden. Immediately after this the coarse ground product is subject to a fine grinding (4b) in a Fryma mill, model MK 250 resulting in a product in which the major part of the plant cells are open. It is important for the yield of the components of the soybean (fat, protein etc.) in the final soymilk that the fine grinding takes place immediately after the coarse grinding. The mixture obtained after the fine grinding (4b) is a suspension and this suspension is pumped to an extraction tank (5).

In the extraction tank the pH-value is adjusted to 6.8 by means of 2N NaOH while vigorously stirring. Heat is induced for adjustment of the temperature at 95°C. After a stay in the extraction tank at said temperature for 20-25 minutes, the suspension is conveyed to a centrifugal sieve (6) of the brand Jesma, supplied by Graintec A/S-Jesma Feed Mills, Niels Finsensvej 4, DK-7100 Vejle. This centrifugal sieve is fitted with a sieving unit having a mesh size of 100 microns. By means of the centrifugal sieve the suspension is divided into two fractions in the form of an overflow fraction (7) constituting 768 kg/hour, and an underflow fraction constituting 2916 kg/hour. The overflow fraction, also called "Okara$_I$", contains large amounts of extractable materials such as fat, proteins etc. in addition to fibres and hulls. Okara is the insoluble residue removed from a soyslurry, Okara contains 75-85% moisture and, due to a high fibre content, it has an appearance similar to that of bread dough. In order to obtain a higher yield, the overflow fraction is conveyed to a mixing tank (8) where 95°C hyperfiltered water in an amount of 1075 kg/hour is added, corresponding to a weight ratio of hot water to overflow fraction of approximately 1.5:1. The mixture in the mixing tank is stirred vigorously for about 10-15 minutes.

The fraction coming from the mixing tank (8) is separated in a centrifugal sieve (9) (Jesma, sieve size 100 microns). The overflow fraction (Okara$_{II}$) constitutes 503 kg/hour and must be regarded as waste (11).

The underflow fraction from the centrifugal sieve (9) is mixed (10) with the underflow fraction from the centrifugal sieve (6). The dry matter content of the underflow fraction from the centrifugal sieve (9) is relatively low (about 4%), while the dry matter content of the underflow fraction from the centrifugal sieve (6) is about 12 per cent by weight. By mixing the two underflow fractions from the two centrifugal sieves, a soymilk fraction with a dry matter content of about 10 per cent by weight is obtained in an amount of 4256 kg/hour. This fraction is conveyed to a decanter or a decanter centrifuge (12) (decanter no. CA 655-011 of the brand Westfalia Seperator, Werner-Habig-Strasse, D-4740 Oelde. The fraction is subjected to a heavy gravitation in the decanter whereby heavy particles are separated out. The separated by-product is called Okara$_{dek.}$ (13).

The liquid flow from the decanter is hereafter conveyed to a plate heat exchanger (from Pasilac Therm A/S, Platinvej 8, DK-6000 Kolding; min. capacity 4000 kg/hour) (15), where it is cooled from 90°C to 65°C whereafter it is deodorized under vacuum (16) in a conventional deodorized under vacuum (16) in a conventional deodorizer from Pasilac-Danish Turnkey Dairies Ltd., Europaplads 2, DK-8100 Aarhus C; min. capacity 4000 kg/hour.

The above procedure gives soymilk in an amount of 4000 kg/hour.

The above solely illustrates a method of preparing a soymilk starting material and should not be considered to be limiting since soymilk and other milk-like starting material used by the inventive procedure can be prepared by alternative methods many of which can be found in the literature or are obvious to persons skilled in the art.

### Example 1.

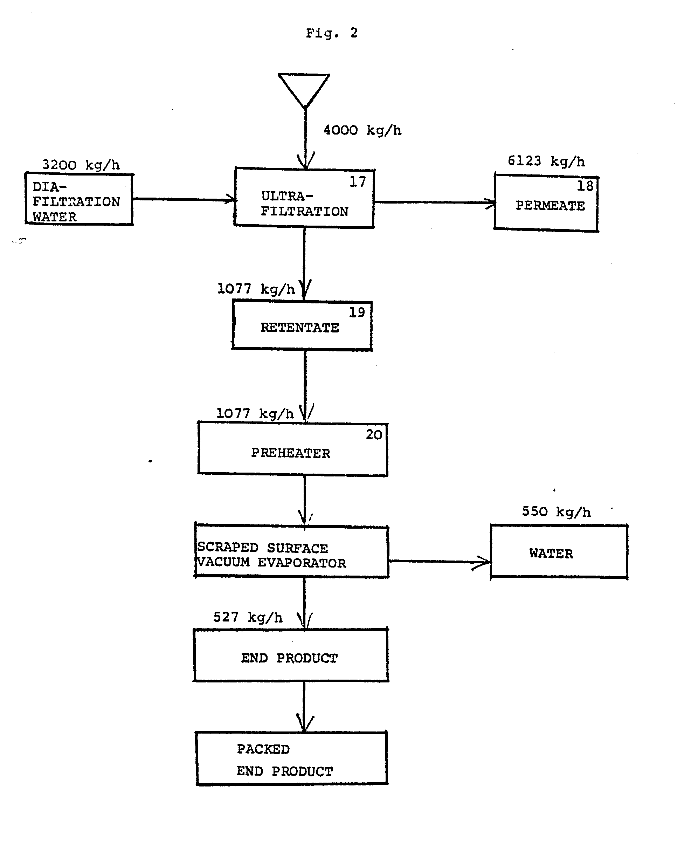

### Preparation of slicable soy-cheese with neutral pH and without additives (Figure 2).

The present example describes the preparation of slicable soy-cheese according to the invention from the soymilk prepared according to the above preparation. The process is shown schematically in Figure 2.

The soymilk (4000 kg/hour) is ultrafiltrated (17) using ultrafiltration units 36 and 37 from DDS-RO Division, DK-4900 Nakskov, fitted with a membrane of the type GR 60P with a cutoff value at the molecular weight of 25,000. The working temperature of the ultrafiltration plant is 65°C, the mean pressure is 4 bar, the flow over the membrane is 30 litres-/plate/min. whereby an average flux of 24 litres/-m²/hour is obtained. During the ultrafiltration diafiltration takes place using diafiltration water in an amount of 3200 kg/hour, corresponding to 80% of the amount of soymilk. This gives a permeate (18) in an amount of 6123 kg/hour and with a dry matter content of about 1-1.5 per cent by weight and a retentate (19) in an amount of 1077 kg/hour and with a dry matter content of about 21-23 per cent by weight. The retentate is conveyed to a preheater (21) where it is preheated to 80°C. Hereafter the retentate is conveyed into the chamber of a scraped surface vacuum evaporator (22) of the type AFE-evaporator from the firm of Niro Atomizer, Gladsaxevej 305, DK-2860 Søborg. In the scraped surface vacuum evaporator the retentate is evaporated to a dry matter content of about 45 per cent by weight in the final product. In the vacuum chamber the product obtained reaches a temperature of 40-45°C. by evaporation, water (23) in an amount of 550 kg/hour is removed. The product obtained (24) constitutes 527 kg/hour. The product obtained is now a soy-cheese having a neutral pH-value. The product is cut into suitable pieces and packed, e.g. in shrink plastics and placed in a refrigerated storage room. The product has a slicable texture corresponding to the texture of convention slicable cheese.

## Example 2

This example illustrates some uses of the product according to the invention.

## Substitute for semi-solid cheese.

A product according to the invention having a dry matter content of about 35 per cent by weight calculated without considering the additives, is an excellent substitute for a semi-solid cheese. There are no specific limitations with regard to additives that may be incorporated into semi-solid products of this type. However, addition of salt and a change of pH to a lower value will normally result in a product having a softer texture.

When the present semi-solid type of products are incorporated into stews, the parts thereof will obtain a meat-like texture.

## Substitute for a solid cheese.

A product according to the invention having a dry matter content of about 45 per cent by weight calculated without considering the additives, is an excellent substitute for a conventional solid cheese. The product is specially suitable for use in sliced form with bread and for use in salads. Like the semi-solid product mentioned above, the present solid type of product can also be used in stews with the same excellent results. The solid type of product can, as opposed to conventional tofu, be grated to a product which can be used as extender in forcemeat dishes or completely substitute minced meat.

## Results with herbs.

A product according to claim 1 is cooked, using the following ingredient:
Grated cheese-like soy product, 500 g
Cut chives, 2-3 tablespoons
Cut dill, 1-2 tablespoons
Fresh sweet basil 1/2 tablespoon
Fresh thyme, 1/2 tablespoon
Salt, 2-3 teaspoons
Coarse ground pepper, a pinch
Eggs, 2
Vegetable margarine for frying, 25-50 g

The soy-cheese product is grated coarsely on a shredder. The grated soy-cheese is then placed in a fine-meshed sieve which is immersed into boiling water for 3 minutes. The boiled soy-cheese product is then allowed to drip off and while it is still fairly hot, the remaining ingredients are added. The obtained basic forcemeat-like material is thereupon shaped into rissoles which are fried for about 5 minutes on each side using the margarine.

The rissoles have a pleasant appearance, a good consistency and they taste good.

The above basic forcemeat-like material alternatively can be baked in an oven for 25-30 minutes at 180-200°C. Also in this way a product with good organoleptic properties is achieved.

You can avoid cooking of the grated mas in the above procedure and instead form the grated mass into balls or rissoles with your hands and fry these on the frying pan or in a deep-fat pot.

It is also possible to shape the grated soy-cheese into pieces having a diameter of 10-12 cm and a height of 1-2 cm and squeeze them softly. After that you may season the cheese lumbs and then bake them in an oven for about 12 minutes at 200-250°C on each side. The soy-cheese lumbs formed of grated soy-cheese can also be fryed on a frying pan.

Since meat does not form part of the above recipe, the products prepared in the present example are suitable for vegetarians. If eggs are omitted, the products are also suitable for veganes.

Snack products.

A product according to example 1 is sliced and then heat-treated by cooking, frying, baking, or treatment in a microwawe oven. In either case, a crisp product suitable for snacks is achieved. The snack product can of course be seasoned, if so desired, both before and after the heat-treatment.

Baked buns.

Yeast is stirred in water whereafter a suitable amount of vegetable fats, flour, salt, sugar, and grated product according to the invention is added, resulting in an ordinary bun dough. After rising the dough is shaped into buns, which after another rising are baked till they are golden brown. The buns taste deliciously and furthermore resemble buns which were made as control and in which the grated material according to the inventions had been replaced by flour.

As it appears, the inventive product can be used for numerous purposes and the use of the products is naturally not limited to the uses stated here, as person skilled in the art as a matter of course can find a row of just as important fields of application.

**Claims**

1. A cheese-like product in which the major part comprises vegetable materials obtained from protein containing seeds, such as seeds from leguminous plants and/or other seeds rich in protein and optionally including one or more additives, such as flavours, colouring matters, pH-adjusting agents, essences, salts, fat or oil containing substances, additional proteins of vegetable or animal origin, carbohydrates, and bacteria cultures, characterised in that the product is prepared by ultrafiltration optionally combined with diafiltration of a protein containing extract from the seeds without using a coagulant, followed by evaporation and in that it is sliceable and has a dry matter content of at least 30 per cent by weight, calculated without considering the additives, if present.

2. A cheese-like product according to claim 1, characterised in a trypsin inhibitor content of below 5,000 units per gram and an alpha-galactocide content of below 1 per cent by weight, both calculated on dry matter and without considering additives, if present.

3. A cheese-like product according to claim 1, characterised in that it is prepared from an extract of seeds from leguminous plants.

4. A cheese-like product according to claim 3, characterised in that the extract is soymilk.

5. A cheese-like product according to claim 1, characterised in that it is prepared from an extract of seeds from one or more plants chosen among plants of the genera Chenopodium, Atriplex, Fagopyrum, Polygonum, Lupinus, Hordeum, Zea, Sorghum, Panicum, Setaria, Pennisetum, Eleusine, Oryza, Avena, Triticum, Triticale, and Secale.

6. A process for preparing the cheese-like product according to claim 1, characterised by ultrafiltrating, optionally combined with diafiltration, a milk-like starting material made of seeds of leguminous plants and/or other seeds rich in protein and optionally containing one or more additives; optionally adding one or more additives to the resulting retentate; and evaporating the retentate including the additives, if present to obtain a product, which product, optionally after a finishing process known per se, can substitute traditional semi-solid or solid cheese types.

7. A process according to claim 6, characterised in subjecting the evaporated product to one or more finishing treatments to enhance the storage life of the product, its appearance and its handiness, said finishing treatments being chosen among autoclaving, surface treatment, such as treatment with mould inhibiting agents, e.g. natamycine, application of a surface coating of paraffin or plastics, and packaging for dispatch and distribution.

8. A process according to claim 6, characterised in that a the milk-like starting material contains one or more additives chosen among: flavours, co louring matter, pH-adjusting agents, essences, salts, fat or oil containing substances, additional proteins of vegetable or animal origin, carbohydrates, and bacteria cultures.

9. A process according to claim 6, characterised in that one or more additives chosen among: flavours, colouring matter, pH-adjusting agents, essences, salts, fat or oil containing substances, additional proteins of vegetable or animal origin, carbohydrates, and bacteria cultures is/are added to the retentate before evaporation.

10. The use of a cheese-like product according to claim 1 as a substitute for conventional semi-solid or solid cheese types.

11. The use of a cheese-like product according to claim 1 for preparation of a crisp product of the "snack" type by heat treatment of said cheese-like product by cooking, frying, baking or by treatment in a microwawe oven.

12. The use of a cheese-like product according to claim 1 as a substitute for meat.

Fig. 1

498 kg/h
┌─────────────────┐ 1
│ DENULLED        │
│ SOYBEANS        │
└─────────────────┘

3187 kg/h
┌─────────────────┐ 2
│ WATER           │
└─────────────────┘

3685 kg/h → [3] MIXTURE

3685 kg/h → [4A] COARSE GRINDING / [4B] FINE GRINDING

3685 kg/h → [5] EXTRACTION TANK

3685 kg/h → [6] JESMA 100 μm

768 kg/h → [7] OKARA$_I$

1075 kg/h

[8] MIXING TANK

2916 kg/h → [10] SOYMILK

1920 kg/h

1340 kg/h → [9] JESMA 100 μm

503 kg/h → [11] OKARA$_{II}$

4256 kg/h → [12] DECANTER → [13] OKARA, dec

4000 kg/h → [15] PLATE HEAT EXCHANGER

4000 kg/h → [16] DEODORIZER

0 261 586

Fig. 2

4000 kg/h

| 3200 kg/h | |
|---|---|
| DIA-FILTRATION WATER | |

ULTRA-FILTRATION  17

6123 kg/h

PERMEATE  18

1077 kg/h

RETENTATE  19

1077 kg/h

PREHEATER  20

SCRAPED SURFACE VACUUM EVAPORATOR

550 kg/h

WATER

527 kg/h

END PRODUCT

PACKED END PRODUCT